# EUROPÄISCHE PATENTANMELDUNG

(11) **EP 2 778 497 A2**
(43) Veröffentlichungstag der Anmeldung: **17.09.2014**
(21) Anmeldenummer: 13004232.8
(22) Anmeldetag: 28.08.2013
(51) Int. Cl.: F16M 11/00, G06F 3/039

(54) **Kombinierter Touchpen für Smartphones**

(30) Priorität: 12.03.2013 DE 202013002342 U
(71) Anmelder: Werner Dorsch GmbH, 64807 Dieburg (DE)
(72) Erfinder: Schwarz, Andreas, 64401 Groß-Bieberau (DE)
(74) Vertreter: Gallo, Wolfgang

(57) **Zusammenfassung**

Touchpen zum Antasten berührungsempfindlicher Bildschirme von Smartphones oder ähnlichen Geräten, bestehend aus einem Touchpenteil (1) und einem Stützbeinteil (2), wobei das Touchpenteil (1) an seinem vorderen Ende mit einer Tastspitze (11) versehen ist, das Stützbeinteil an einem Ende mit einem daran über ein Scharniergelenk (21) angebrachten Zapfen (22) versehen ist, der in eine Kopfhörerbuchse des Smartphones oder eine andere Öffnung desselben einsteckbar ist, und das Touchpenteil (1) und das Stützbeinteil (2) axial zu einem einheitlichen Körper zusammensteckbar sind, indem eines (1) dieser beiden Teile als Hülsenkörper ausgebildet ist, der das andere Teil (2) teilweise aufnimmt.

## Beschreibung

Die Erfindung betrifft einen kombinierten Touchpen für Smartphones.

Ein Touchpen ist bekanntlich ein Berührungsstift, der eine Berührungsspitze hat, um damit kleine Schaltflächen, beispielsweise einer angezeigten Tastatur, auf dem berührungsempfindlichen Bildschirm eines Smartphones anzutasten. Die Berührungsspitze kann als Gummispitze, aber auch als Kunststoff- oder runde Metallspitze ausgebildet sein, damit der Bildschirm beschädigungsfrei angetastet werden kann.

Solche Touchpens sind bekannt. Dabei sind auch Touchpens bekannt, an deren hinterem Ende über eine flexible Kordel ein Zapfen verbunden ist, der in eine Kopfhörerbuchse des Smartphones einsteckbar ist, damit der Touchpen am Smartphone befestigt ist und bei Nichtgebrauch oder Benutzungsunterbrechungen nicht in der Hand gehalten werden muß und nicht herunterfallen kann. Die Kordel ist lang genug, damit der Touchpen bei eingestecktem Zapfen benutzt werden kann.

Es ist bei Touchpens auch bereits bekannt, einen derartigen Zapfen über ein Gelenk direkt am hinteren Ende des Touchpens anzuordnen. Dadurch kann dem Touchpen eine zweite Funktion, nämlich als Stützfuß, zugeordnet werden, wenn der Zapfen in die am oberen Rand des Smartphones angeordnete Kopfhörerbuchse eingesteckt wird. Das Smartphone kann dann auf einem Tisch oder einer anderen Fläche schrägstehend aufgestellt werden, so dass sein Bildschirm bequemer abzulesen ist, um beispielsweise Nachrichten oder Internet-inhalte bequemer lesen zu können. Allerdings ist der Touchpen dann nicht mehr in seiner Funktion als Taststift verfügbar.

Aufgabe der Erfindung ist es, einen Touchpen hinsichtlich seiner Funktionalität noch vielseitiger und zweckmäßiger auszubilden.

Diese Aufgabe wird gemäß der Erfindung durch die im Anspruch 1 angegebene Ausbildung eines kombinierten Touchpens gelöst. Vorteilhafte Ausgestaltungen der Erfindungen sind Gegenstand der Unteransprüche.

Der erfindungsgemäße Touchpen ist zweiteilig ausgebildet und besteht aus einem als Stützbein verwendbaren Teil und einem als Touchpen verwendbaren Teil, von denen der Touchpenteil mit seinem rückwärtigen Bereich als Aufnahmehülse ausgebildet ist, um den Stützbeinteil teilweise aufzunehmen, so dass man beide Teile axial ineinander stecken kann. Im zusammengesteckten Zustand wird der am Stützbeinteil über ein Gelenk angeordnete Zapfen innerhalb des Touchpenteils aufgenommen.

Das Stützbeinteil ist vorzugsweise teleskopartig ausgebildet, um seine Länge und damit die Neigung des abgestützten Smartphones verstellen zu können. Dabei wirken die Teleskopelemente des Stützbeinteils reibschlüssig derart miteinander zusammen, dass die relative Verstellung und damit die Längenänderung schwergängig ist, so dass die jeweils in Gebrauch eingestellte Lage beim Abstützen des Smartphones stabil bleibt.

Das Stützbeinteil kann an seinem bezüglich des Zapfens entgegengesetzten Ende mit einer rutschhemmenden Kappe ausgebildet sein. Diese ist dann vorzugsweise so gestaltet, dass sie ebenfalls als Tastspitze verwendet werden kann, so dass, wenn Stützbeinteil und Touchpenteil zusammengesteckt sind, beide Enden des kombinierten Touchpens als Tast-spitze verwendet werden können und so der Benutzer nicht darauf zu achten braucht, das richtige Ende zum Antasten zu benutzen.

Die Erfindung wird nachstehend anhand eines Ausführungsbeispiels unter Bezugnahme auf die anliegenden Zeichnungen mehr im Einzelnen beschrieben. In den Zeichnungen zeigt:
- Fig. 1: in Seitenansicht der zusammengesteckte kombinierte Touchpen,
- Fig. 2: der Touchpen im auseinandergezogenen Zustand, so dass Touchpenteil und Stützbeinteil getrennt sind,
- Fig. 3: das Stützbeinteil in dem durch teilweises Auseinanderziehen seiner Teleskopelemente verlängerten Zustand,
- Fig. 4: den kombinierten Touchpen wiederum zusammengesteckt, wobei jedoch das Stützbeinteil gegenüber Fig. 1 in umgekehrter Orientierung in das Touchpenteil eingesteckt ist,
- Fig. 5: im Längsschnitt eine leicht modifizierte Ausführungsform eines kombinierten Touchpen im zusammengesteckten Zustand,
- Fig. 6: den Touchpen nach Fig. 5 im Längsschnitt in ebenfalls zusammengestecktem Zustand, jedoch mit umgekehrter Orientierung des Stützbeinteils,
- Fig. 7: eine Darstellung ähnlich Fig. 6, wobei jedoch der angelenkte Zapfen des Stützbeinteils geschwenkt ist, und
- Fig. 8: eine Darstellung ähnlich Fig. 7, wobei das Stützbeinteil teleskopartig auseinandergezogen ist.

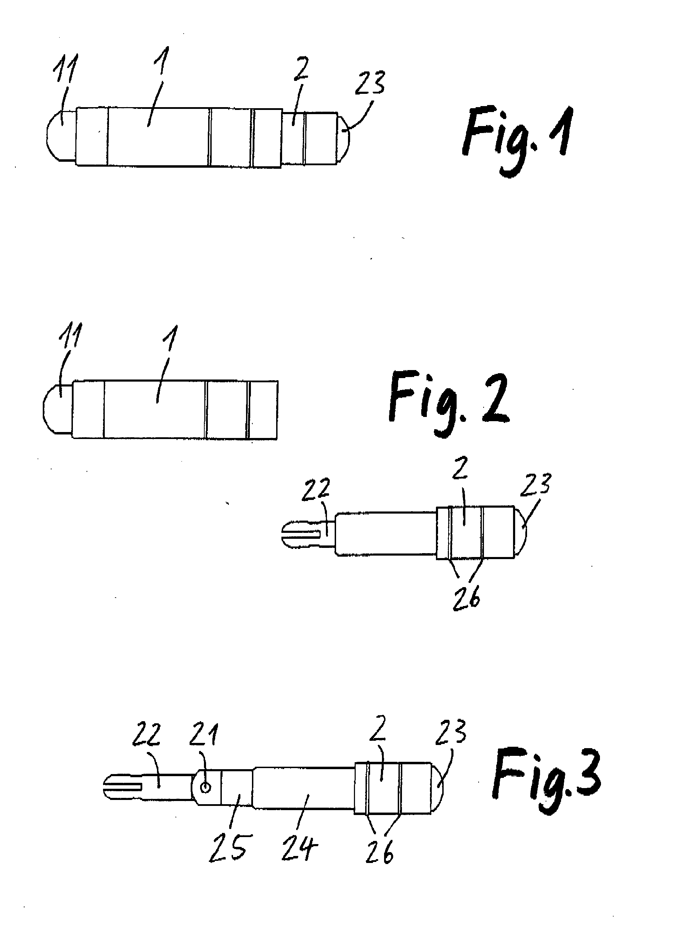

Fig. 1 zeigt den kombinierten Touchpen nach der Erfindung im zusammengesteckten Zustand als einheitlichen Körper. Er besteht aus einem Touchpenteil 1 und einem Stützbeinteil 2. Diese sind in Fig. 1 axial ineinandergesteckt.

Fig. 2 zeigt das Touchpenteil 1 und das Stützbeinteil 2 in auseinandergezogenem, also getrenntem Zustand.

Das Touchpenteil 1 ist hülsenartig ausgebildet und hat an seinem vorderen Ende eine kappenartige weiche Tastspitze 11.

Das Stützbeinteil 2 weist am vorderen Ende einen über ein Scharniergelenk am übrigen Stützbeinteil verbundenen Zapfen 22 auf, der so geformt und bemessen ist, dass er in die Kopfhörerbuchse eines Smartphones einsteckbar ist. Am dazu entgegengesetzten, also rückwärtigen Ende weist das Stützbeinteil eine rutschhemmend ausgebildete Kappe 23 auf, die ähnlich wie die Tastspitze 11 des Touchpenteils so ausgebildet ist, dass sie sowohl als rutschhemmender Fuß wie auch als zweite Tastspitze benutzt werden kann, wenn der Touchpen zusammengesteckt ist, wie in Fig. 1 gezeigt.

Fig. 3 zeigt das teleskopartig ausgebildete Stützbeinteil 2 im teilweise ausgezogenen und dadurch verlängerten Zustand. Aus dieser Abbildung sieht man, dass der Stützbeinteilkörper aus zwei ineinanderschiebbaren und auseinanderziehbaren Teleskopelementen 24 und 25 besteht. Diese wirken reibschlüssig und schwergängig miteinander zusammen.

Der rückwärtige Teil des Stützbeinteils hat an seinem Umfang mehrere in die Umfangsfläche eingelassene und leicht überstehende Gummiringe 26, die beim Zusammenstecken von Stützbeinteil und Touchpenteil mit der Hülseninnenwandfläche des Touchpenteils 1 zusammenwirken, um einen elastischen, aber straffen Sitz zu erzeugen.

Zum Zusammenstecken von Touchpenteil und Stützbeinteil wird das Stützbeinteil mit dem Zapfen 22 voraus in den Hülsenkörper des Touchpenteils 1 eingeschoben. Der Hülsenkörper des Touchpenteils 1 ist an seinem vorderen, mit der Tastspitze 11 verschenen Ende nicht vollständig geschlossen, sondern weist eine mittige Bohrung auf, durch die Luft nach vorne entweichen kann, wenn das Stützbeinteil 2 in den Hülsenkörper des Touchpenteils 1 eingeschoben wird. Dementsprechend hat auch die Tastspitze 11 des Touchpenteils 1 ein kleines mittiges Loch, um die Luft entweichen zu lassen. Statt eines mittigen Lochs könnte auch eine Anzahl etwa radial ausmündender Löcher am Umfang der Tastspitze vorgesehen sein. Alternativ kann auch die Tastspitze 11 ohne Entlüfteloch ausgebildet sein und der Hülsenkörper des Touchpenteils 1 mindestens eine radiale Entlüftebohrung aufweisen.

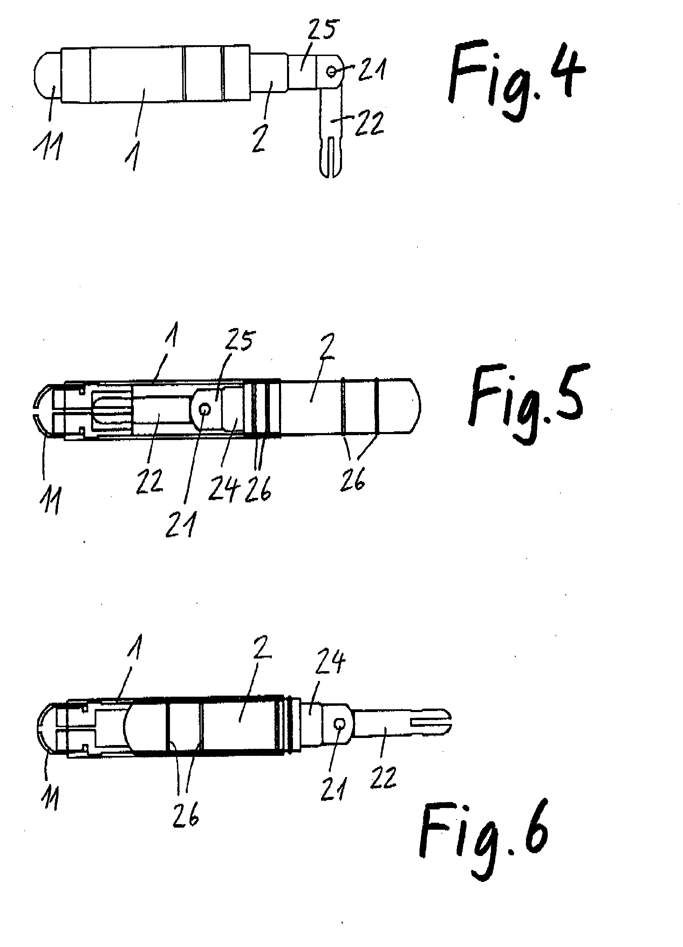

Fig. 4 zeigt das Stützbeinteil 2 in gegenüber der Orientierung in Fig. 1 umgekehrter Orientierung in das Touchpenteil 1 eingesteckt, so dass der Zapfen 22 frei herausragt und die so zusammengesteckte Anordnung insgesamt als Stützfuß verwendet werden kann.

Die Fig. 5 bis 8 zeigen eine leicht abgewandelte Ausführungsform des kombinierten Touchpen nach der Erfindung, wobei die Darstellungen nach den Fig. 5 bis 8 jeweils im Längsschnitt gehalten sind. Fig. 5 zeigt dabei den zusammengesteckten Touchpen ähnlich Fig. 1, wobei der Zapfen 22 sich in der Hülse des Touchpenteils 1 befindet, und Fig. 6 zeigt die zusammengesteckte Anordnung ähnlich Fig. 4, wobei das Stützbeinteil in seiner Orientierung umgekehrt ist und der Zapfen 22 herausschaut.

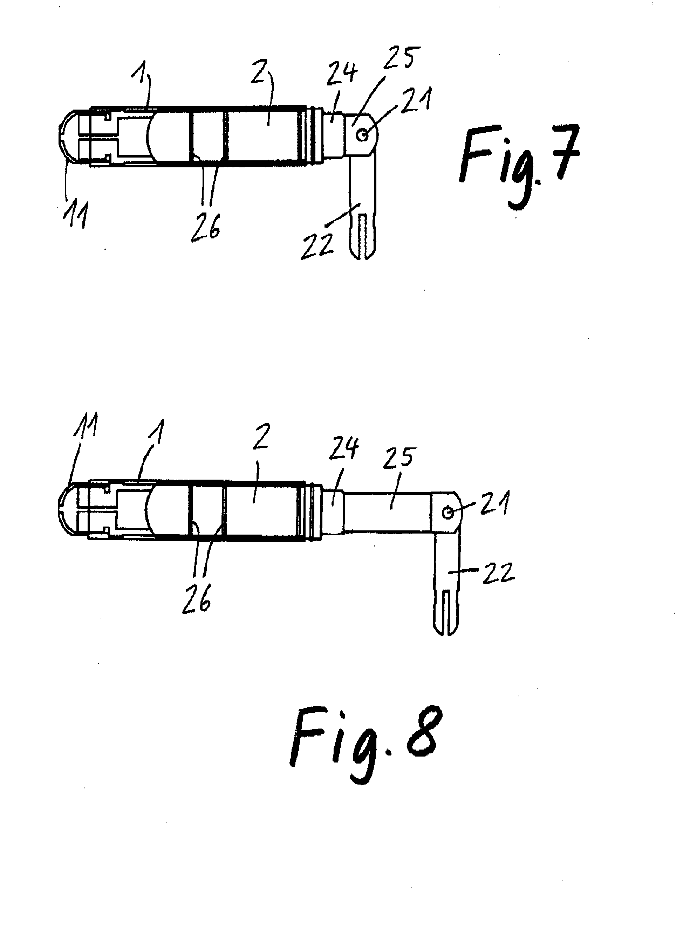

Der Unterschied der Ausführungsform nach den Fig. 5 bis 8 gegenüber der Ausführungsform nach den Fig. 1 bis 4 besteht darin, dass die Teleskopanordnung des Stützbeinteils so konfiguriert ist, dass im zusammengeschobenen Zustand der Teleskopanordnung, wie sie in den Fig. 6 und 7 sichtbar ist, der mit dem Gelenk 21 zum Anschluß des Zapfens 22 versehene Endbereich des Teleskopelements 25 aus dem Teleskopelement 24 herausragt, so dass der Zapfen 25, wie Fig. 7 zeigt, auch dann schwenkbar ist.

Während Fig. 7 den zusammengeschobenen Teleskopzustand des Stützbeinteils zeigt, zeigt Fig. 8 den auseinandergezogenen Teleskopzustand des Stützbeinteils.

Die Ausführungsform nach den Fig. 1 bis 4 hat den Vorteil, dass die Gesamtlänge des gemäß Fig. 1 zusammengesteckten kombinierten Touchpen kürzer ist als bei der Ausführungsform nach den Fig. 5 bis 8. Die Ausführungsform nach den Fig. 5 bis 8 hat jedoch gegenüber der Ausführungsform nach den Fig. 1 bis 4 den Vorteil, dass der Zapfen 22 zum Gebrauch immer schwenkbar ist, ohne zuvor die Teleskopteile etwas auseinanderzuziehen.

## Patentansprüche

1. Touchpen zum Antasten berührungsempfindlicher Bildschirme von Smartphones oder ähnlichen Geräten, bestehend aus einem Touchpenteil (1) und einem Stützbeinteil (2), wobei das Touchpenteil (1) an seinem vorderen Ende mit einer Tastspitze (11) versehen ist, das Stützbeinteil an einem Ende mit einem daran über ein Scharniergelenk (21) angebrachten Zapfen (22) versehen ist, der in eine Kopfhörerbuchse des Smartphones oder eine andere Öffnung desselben einsteckbar ist, und das Touchpenteil (1) und das Stützbeinteil (2) axial zu einem einheitlichen Körper zusammensteckbar sind, indem eines (1) dieser beiden Teile als Hülsenkörper ausgebildet ist, der das andere Teil (2) teilweise aufnimmt.

2. Touchpen nach Anspruch 1, wobei das Touchpenteil (1) mit einem Hülsenkörper ausgebildet ist und das Stützbeinteil (2) in diesen Hülsenkörper einsteckbar ist.

3. Touchpen nach Anspruch 2, wobei das Stützbeinteil (2) mit dem Zapfen (22) voraus in den Hülsenkörper des Touchpenteils (1) einsteckbar ist.

4. Touchpen nach Anspruch 2 oder 3, wobei das Stützbeinteil sowohl mit dem Zapfen (22) voraus als auch in umgekehrter Orientierung in den Hülsenkörper des Touchpenteils (1) einsteckbar ist.

5. Touchpen nach einem der Ansprüche 1 bis 4, wobei das Stützbeinteil (2) an seinem bezüglich des Zapfens (22) entgegengesetzten Ende mit einem rutschhemmenden Fußelement (23) versehen ist.

6. Touchpen nach Anspruch 5, wobei das Fußelement (23) als bei zusammengesteckten Touchpen wahlweise benutzbare zweite Tastspitze ausgebildet ist.

7. Touchpen nach einem der Ansprüche 1 bis 6, wobei das Stützbeinteil (2) zum Zwecke seiner Längenveränderlichkeit teleskopartig mit zwei ineinander schiebbaren Teleskop-elementen (24, 25) ausgebildet ist.

8. Touchpen nach Anspruch 7, wobei die Teleskopelemente (24, 25) schwergängig reibschlüssig miteinander zusammenwirken.

9. Touchpen nach Anspruch 2, wobei der Hülsenkörper des Touchpenteils (1) und/oder die Tastspitze (11) eine Entlüftebohrung zum Entlüften des Innenraums des Hülsenkörpers beim Einstecken des Stützbeinteils (2) hat.

10. Touchpen nach Anspruch 7, wobei das innere Teleskopelement (25) über das Scharniergelenk (21) mit dem Zapfen (22) verbunden ist und die Teleskopanordnung so konfiguriert ist, dass bei vollständig in das äußere Teleskopelement (24) eingeschobenen inneren Teleskopelement (25) das Scharniergelenk (21) aus dem äußeren Teleskopelement (24) herausragt und das Schwenken des Zapfens (22) ermöglicht.

11. Touchpen nach einem der Ansprüche 1 bis 11, wobei das im Hülsenkörper des einen Teils (1) aufzunehmende andere Teil (2) an seinem mit der Hülsenkörperinnenwand zusammenwirkenden Umfangsflächenbereich mit eingelassenen, leicht überstehenden Ringen (26) aus Gummi, gummiartigem oder sonstigen elastischen Material versehen ist.
